(19) Europäisches Patentamt
European Patent Office
Office européen des brevets

(11) Veröffentlichungsnummer: **0 407 798 A2**

# (12) EUROPÄISCHE PATENTANMELDUNG

(21) Anmeldenummer: **90112080.8**

(22) Anmeldetag: **26.06.90**

(51) Int. Cl.5: **C08G 18/08**, C08G 18/83, C09D 175/04

(30) Priorität: **08.07.89 DE 3922493**

(43) Veröffentlichungstag der Anmeldung: **16.01.91 Patentblatt 91/03**

(84) Benannte Vertragsstaaten: **AT BE DE ES FR GB IT NL**

(71) Anmelder: **BAYER AG**
**D-5090 Leverkusen 1 Bayerwerk(DE)**

(72) Erfinder: **Reiff, Helmut, Dr.**
**Paul-Klee-Strasse 68i**
**D-5090 Leverkusen(DE)**
Erfinder: **Lorenz, Otto, Prof. Dr.**
**Lensbachstrasse 19**
**D-5106 Roetgen/Rott(DE)**

## (54) Verfahren zur Herstellung von wässrigen Dispersionen von Polyurethanen und ihre Verwendung als Beschichtungsmittel für beliebige Substrate.

(57) Ein neues Verfahren zur Herstellung von wäßrigen Dispersionen von eingebaute Carboxylatgruppen aufweisenden Polyurethanen, in den als Gegenionen zu den Carboxylatgruppen überwiegend unsubstituierte Ammoniumionen vorliegen, bei welchem man entsprechende Dispersionen, in denen als Gegenionen Ammoniumionen auf Basis von tertiären aliphatischem Aminen mit 3 bis 6 Kohlenstoffatomen vorliegen, mit Ammoniak versetzt und anschließend die im Überschuß vorliegenden freien Basen im Vakuum entfernt, sowie die Verwendung der so erhaltenen wäßrigen Dispersionen als Beschichtungsmittel für beliebige Substrate.

EP 0 407 798 A2

# VERFAHREN ZUR HERSTELLUNG VON WÄSSRIGEN DISPERSIONEN VON POLYURETHANEN UND IHRE VERWENDUNG ALS BESCHICHTUNGSMITTEL FÜR BELIEBIGE SUBSTRATE

Die Erfindung betrifft ein neues Verfahren zur Herstellung von wäßrigen Dispersionen von chemisch eingebaute Carboxylatgruppen aufweisenden Polyurethanen, in denen als Gegenionen zu den Carboxylatgruppen unsubstituierte Ammoniumgruppen vorliegen und die Verwendung der wäßrigen Dispersionen als Beschichtungsmittel für beliebige Substrate.

Wäßrige Dispersionen von eingebaute Carboxylatgruppen als hydrophile Zentren aufweisenden Polyurethanen sind seit langem bekannt (vgl. z.B. DE-AS 1 495 745 (= US-PS 3 479 310), GB-PS 1 076 688, US-PS 4 092 286, US-PS 4 237 264 oder US-PS 4 408 008).

In diesen Dispersionen des Standes der Technik liegen als Gegenionen zu den chemisch eingebauten Carboxylatgruppen im allgemeinen Ammoniumkationen vor, die sich von tertiären Aminen ableiten. So wird beispielsweise in der US-PS 4 408 008 (Kol. 9, Zeile 46 - Kol. 10, Zeile 1) ausdrücklich empfohlen, bei der Herstellung von wäßrigen Polyurethandispersionen zur Neutralisation der Carboxylgruppen solche Amine zu verwenden, die keine gegenüber Isocyanatgruppen reaktionsfähige Wasserstoffatome aufweisen. Der Vorteil der Verwendung von leicht flüchtigen tertiären Aminen zur Neutralisation der in den Polyurethanen eingebauten Carboxylgruppen ist in dem Umstand zu sehen, daß die Amine bei der Herstellung von Überzügen unter Verwendung der entsprechenden Polyurethandispersionen abdiffundieren, so daß sich die Wasserresistenz der Überzüge erhöht. Der Nachteil derartiger leichtflüchtiger tertiärer Amine liegt in ihrer öko- und toxikologischen Bedenklichkeit.

Ein wesentlicher Fortschritt stellen daher die in der EP-A-O 269 972 beschriebenen Dispersionen von eingebaute Carboxylatgruppen aufweisenden Polyurethanen dar, in denen als ionische hydrophile Zentren Struktureinheiten der Formel

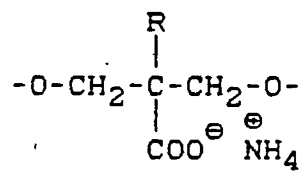

mit R = $C_1$-$C_4$-Alkylrest vorliegen.

Im Unterschied zu Beispiel 11 der DE-AS 1 495 745, welches die Herstellung einer in anwendungstechnischer Hinsicht unbefriedigenden, Ammoniumgruppen als Gegenionen aufweisenden Dispersionen beschreibt, handelt es sich bei den Dispersionen gemäß EP-A-0 269 972 um qualitativ hochwertige Produkte, deren Nachteil in dem Verfahren zu ihrer Herstellung liegt. So können bei der Herstellung der Polyurethane zwecks Einbau der ionischen Zentren nur ganz spezielle Hydroxycarbonsäuren wie beispielsweise Dimethylolpropionsäure verwendet werden, deren Hydroxylgruppen mit Isocyanaten selektiv unter Urethanbildung abreagieren, ohne daß die Carboxylgruppen am Reaktionsgeschehen teilhaben, so daß sie im Anschluß an die Herstellung der Polyurethane durch Neutralisation in Carboxylatgruppen überführt werden können. Bei der Herstellung der Polyurethane muß im übrigen die Isocyanat-Polyadditionsreaktion völlig zum Abschluß gekommen sein, bevor die Carboxylgruppen mit Ammoniak neutralisiert werden, um eine Reaktion zwischen Isocyanatgruppen und Ammoniak auszuschließen. Aus dem gleichen Grund ist die Verwendung von Polyhydroxycarbonsäuren in der Salzform als ionische Aufbaukomponente unmöglich.

Überraschenderweise wurde nun ein besonders einfaches Verfahren zur Herstellung von wäßrigen Dispersionen von eingebaute Carboxylatgruppen aufweisenden Polyurethanen gefunden, in denen als Gegenionen Ammoniumgruppen

$$NH_4^{\oplus}$$

vorliegen.

Dem nachstehend näher beschriebenen erfindungsgemäßen Verfahren liegt die überraschende Beobachtung zugrunde, daß die in den Ausgangsdispersionen kationisch vorliegenden tertiären Amine trotz ihres vergleichsweise hohen Siedepunkts durch Behandlung der wäßrigen Dispersionen mit Ammoniak und

anschließende destillative Entfernung des vorliegenden Basenüberschusses im Vakuum durch einfache unsubstituierte Ammoniumgruppen ersetzt werden können.

Gegenstand der Erfindung ist ein Verfahren zur Herstellung von wäßrigen Dispersionen von eingebaute Carboxylatgruppen aufweisenden Polyurethanen, in denen als Gegenionen zu den Carboxylatgruppen überwiegend Ammoniumionen

$$NH_4^{\oplus}$$

vorliegen, dadurch gekennzeichnet, daß man wäßrige Dispersionen von eingebaute Carboxylatgruppen aufweisenden Polyurethanen, in denen als Gegenionen zu den Carboxylatgruppen Ammoniumionen der Formel

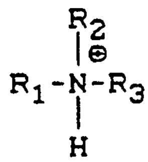

vorliegen, wobei
$R_1$, $R_2$ und $R_3$ für gleiche oder verschiedene Alkylreste mit 1 bis 4 Kohlenstoffatomen stehen, mit der Maßgabe, daß die Summe der Anzahl der Kohlenstoffatome dieser Reste 3 bis 6 beträgt,
mit einer, bezogen auf die Trialkylammoniumionen, zumindest äquivalenten Menge Ammoniak behandelt und anschließend die im Überschuß vorliegenden freien Basen im Vakuum entfernt.

Gegenstand der Erfindung ist auch die Verwendung der so erhaltenen wäßrigen Dispersionen als Beschichtungsmittel für beliebige Substrate.

Für das erfindungsgemäße Verfahren sind alle beliebigen wäßrigen Dispersionen von Polyurethanen mit eingebauten Carboxylatgruppen als Ausgangsdispersionen geeignet, in denen als Gegenionen zu den Carboxylatgruppen Ammoniumgruppen vorliegen, wie sie durch Anlagerung eines Protons an ein tertiäres aliphatisches Amin mit 3 bis 6 Kohlenstoffatomen erhalten werden. In den als Ausgangsmaterialien eingesetzten Dispersionen liegen somit als Gegenionen zu den eingebauten Carboxylatgruppen Ammoniumionen der Formel

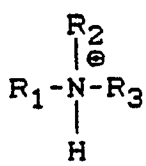

vor, wobei
$R_1$, $R_2$ und $R_3$ die bereits obengenannte Bedeutung haben und vorzugsweise jeweils für Methylgruppen und besonders bevorzugt jeweils für Ethylgruppen stehen.

Es handelt sich bei den genannten Kationen um solche, wie sie durch Anlagerung eines Protons an ein aliphatisches Amin wie beispielsweise Trimethylamin, Triethylamin, N-Methyl-N-ethyl-propylamin, N,N-Dimethylethylamin, N,N-Diethyl-methylamin oder N,N-Dimethyl-n-butylamin, insbesondere Trimethylamin und besonders bevorzugt Triethylamin erhalten werden.

Von dieser Einschränkung abgesehen, können zur Durchführung des erfindungsgemäßen Verfahrens beliebige wäßrige Polyurethandispersionen des Standes der Technik eingesetzt werden, d.h. solche, die als alleinige hydrophile Zentren Carboxylatgruppen der genannten Art aufweisen, und wie sie beispielsweise gemäß US-PS 3 479 310 oder GB-PS 1 076 688 zugänglich sind oder auch solche, die neben derartigen anionischen Zentren innerhalb von end-oder seitenständig angeordneten Polyetherketten vorliegende Ethylenoxideinheiten als weitere hydrophile Gruppierungen aufweisen, und beispielsweise gemäß US-PS 4 092 286, US-PS 4 190 566, US-PS 4 237 264, US-PS 4 192 937, US-PS 4 269 748, DE-05 2 725 589 oder US-PS 4 408 008 zugänglich sind.

Die beim erfindungsgemäßen Verfahren einzusetzenden wäßrigen Polyurethandispersionen weisen im allgemeinen 0,1 bis 120, vorzugsweise 2 bis 100 mÄquivalente pro 100 g Feststoff an in das Polyurethangerüst eingebauten Carboxylatgruppen und 0 bis 30, vorzugsweise 0,5 bis 10 Gew.-% an Ethylenoxideinheiten der genannten Art auf, mit der Maßgabe, daß der Gesamtgehalt der Polyurethane an hydrophilen Zentren der genannten Art ausreichend sein muß, um die Dispergierbarkeit der Polyurethane in Wasser zu gewährleisten. Bei den Gegenionen zu den Carboxylatgruppen handelt es sich um Ammoniumionen der Formel

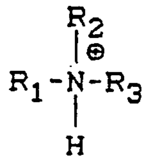

in welcher $R_1$, $R_2$ und $R_3$ die bereits obengenannte Bedeutung bzw. bevorzugte Bedeutung haben.

Besonders bevorzugt werden beim erfindungsgemäßen Verfahren solche wäßrige Dispersionen von Carboxylatgruppen aufweisenden Polyurethanen eingesetzt, in denen die ionischen Zentren Struktureinheiten der Formel

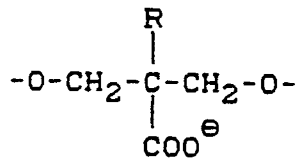

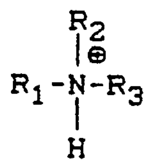

darstellen, wobei
R für einen Alkylrest mit 1 bis 4 Kohlenstoffatomen, vorzugsweise einen Methylrest darstellt und
$R_1$ bis $R_3$ die bereits obengenannte Bedeutung bzw. bevorzugte Bedeutung haben. Diese besonders bevorzugten wäßrigen Polyurethandispersionen werden nach den Methoden des obengenannten Standes der Technik unter Verwendung von Dimethylolalkancarbonsäuren der Formel

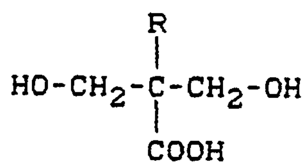

bei der Herstellung der Polyurethane unter anschließender Neutralisation der Carboxylgruppen mit tertiären aliphatischen Aminen mit 3 bis 6 Kohlenstoffatomen oder durch Verwendung der entsprechenden Salze als ionische Aufbaukomponente bei der Herstellung der Polyurethane erhalten.

Zur Durchführung des erfindungsgemäßen Verfahrens werden die wäßrigen Dispersionen im allgemeinen mit einem Feststoffgehalt von 5 bis 50 Gew.-% eingesetzt. Die kontinuierliche Phase der beim erfindungsgemäßen Verfahren eingesetzten Dispersionen besteht entweder ausschließlich aus Wasser oder aus einem Gemisch von Wasser mit gegebenenfalls bei der Herstellung der Dispersionen eingesetztem Hilfslösungsmittel wie beispielsweise Aceton oder N-Methylpyrrolidon. Diese Lösungsmittel können gegebenenfalls in den wäßrigen Dispersionen in einer Menge von bis zu 35 Gew.-%, bezogen auf das Gewicht der kontinuierlichen flüssigen Phase vorhanden sein. Insbesondere bei der Herstellung der Dispersionen unter Mitverwendung von derartigen Hilfslösungsmitteln, die im allgemeinen im Anschluß an die Herstellung der Dispersion destillativ entfernt werden, kann diese destillative Entfernung zusammen mit der Durchführung des erfindungsgemäßen Verfahrens erfolgen.

Zur Durchführung des erfindungsgemäßen Verfahrens werden die Ausgangsdispersionen mit Ammoniak versetzt, wobei die Menge des Ammoniaks so bemessen wird, daß für jedes Mol an in den Dispersionen vorliegenden Kationen der Formel

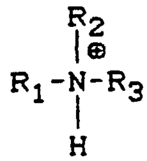

mindestens 1 Mol, vorzugsweise 2 bis 15 und besonders bevorzugt 3 bis 8 Mol Ammoniak zur Verfügung stehen. Das Ammoniak kann gasförmig in die Dispersion eingetragen werden. Vorzugsweise erfolgt der Einsatz des Ammoniaks jedoch in Form einer 1 bis 25, vorzugsweise 5 bis 15 gew.-%igen wäßrigen Lösung innerhalb des Temperaturbereichs von Raumtemperatur bis 80° C. Im Anschluß an die Ammoniakzugabe wird im allgemeinen während eines Zeitraums von 15 Minuten bis 18 Stunden gerührt, worauf sich die destillative Entfernung der im Überschuß vorliegenden Basen im Vakuum, beispielsweise innerhalb des Temperaturbereichs von 10 bis 60° C anschließt. Das hierbei abdestillierte Trialkylamin kann zur Herstellung eines weiteren Ansatzes recyclisiert werden. Das gegebenenfalls gleichzeitig abdestillierte Wasser wird gewünschtenfalls durch erneute Wasserzugabe zumindest teilweise ersetzt, um den gewünschten Festkörpergehalt der gebrauchsfertigen Dispersion einzustellen. Im Falle der Verwendung von wäßrigen Dispersionen, die noch Hilfslösungsmittel der oben beispielhaft genannten Art enthalten, kann deren weitgehende destillative Entfernung gleichzeitig mit der destillativen Entfernung des Basenüberschusses erfolgen.

Auf diese Weise ist es möglich, in einem Arbeitsgang wäßrige Dispersionen von eingebaute Carboxylatgruppenaufweisenden Polyurethanen zu erhalten, deren Gegenionen zu mindestens 50 Äquivalentprozent, vorzugsweise zu mindestens 75 Äquivalentprozent aus Ammoniumionen der Formel

$$\overset{\oplus}{NH_4}$$

H4

bestehen. Gewünschtenfalls kann das beschriebene Verfahren beliebig oft wiederholt werden, um den Kationenaustausch möglichst zu vervollständigen.

Es muß als ganz besonders überraschend angesehen werden, daß es auf diese einfache Weise gelingt, die stärkere Basen darstellenden Trialkylamine, die zudem noch deutlich höher sieden, durch die schwächere Base Ammoniak weitgehend zu verdrängen.

Die Verfahrensprodukte stellen wertvolle Beschichtungsmittel für beliebige Substrate dar. Beim Trocknen der Beschichtungen entweicht vor allem Ammoniak.

In den nachfolgenden Beispielen beziehen sich alle Prozentangaben auf Gewichtsprozente.

## Beispiele

### Herstellung einer wäßrigen Polyurethandispersion I

Ausgangsmaterialien:

200 g Polypropylenglykol des Molekulargewichts 2.000
10,4 g Dimethylolpropionsäure
7,1 g eines einwertigen Polyetheralkohols der OH-Zahl 26, hergestellt durch Alkoxylierung von n-Butanol unter Verwendung eines Gemischs aus 83 % Ethylenoxid und 17 % Propylenoxid
87,3 g 1-Isocyanato-3,3,5-trimethyl-5-isocyanatomethylcyclohexan (IPDI)
48,1 g Caprolactam
7,9 g Triethylamin
830 g entsalztes Wasser

Durchführung:

Dimethylenpropionsäure und die entwässerten Polyether werden vorgelegt und bei 80 bis 105° C mit

IPDI umgesetzt. Nach 90 Minuten wird Caprolactam zugesetzt und weitere 60 Minuten bei 105 °C nachgerührt. Bei 100 °C wird das Triethylamin zugetropft und 3 bis 5 Stunden bei 100 °C nachgerührt, bis mittels Infrarotanalyse kein Isocyanat mehr nachweisbar ist. Nun wird innerhalb 8 Minuten mit Wasser dispergiert und auf Raumtemperatur abgekühlt.

Man erhält ca. 1.200 g einer feinteiligen, lagerstabilen Polyurethandispersion.
Der Gehalt an Carboxylatgruppen beträgt 21,4 mÄquivalente pro 100 g Feststoff; der Gehalt an Ethylenoxideinheiten beträgt 1,6 %, pH-Wert: 8; Festkörper: 30 (berechnet).

Herstellung einer wäßrigen Polyurethandispersion II

Zu einem entwässerten Gemisch aus 248 g (0,146 Mol) Hexandiol-Neopentylglykol-Adipat (Molverhältnis der Glykole = 1:1) und 12,5 g eines auf n-Butanol gestarteten - Polyethylenoxidpolypropylenoxidpolyethers (85:15) vom Molgewicht 2300 fügt man bei 50 °C 38,8 g (0,231 Mol) 1,6-Diisocyanatohexan. Man erwärmt 2 Stunden auf 105 ° C und löst das NCO-endständige Prepolymer in 770 ml Aceton. Der NCO-Gehalt beträgt 1,85 Gew.-%.

Nun verrührt man mit 37,4 g (0,064 Mol) einer 40 %igen wäßrigen Lösung des Triethylaminsalzes der N-Aminoethyl-β-aminopropionsäure in 50 ml Wasser. Nach 15 Minuten wird mit 640 ml Wasser dispergiert und das Aceton abdestilliert. Man erhält eine sehr feinteilige, stabile Polyurethandispersion mit Triethylammoniumcarboxylatgruppen.

Daten :
Menge: 1000 g
pH-Wert: 6-7
Festkörper: 30 %
$COO^{\ominus}$-Gehalt: 20.4 mÄquivalente/100 g Feststoff

Herstellung einer wäßrigen Polyurethandispersion III

Ein analog zu Polyurethandispersion II hergestelltes Material, nunmehr aber unter Verwendung von lediglich 26,9 g (0,046 Mol) des Triethylaminsalzes der N-Aminoethyl-β-aminopropionsäure ergibt eine sehr ähnliche Polyurethandispersion, die jedoch nur 14,9 mÄquivalente pro 100 g Feststoff Carboxylat enthält.

Beispiel 1 (erfindungsgemäßes Verfahren)

500 g der oben beschriebenen Polyurethandispersion I, enthaltend 32,1 mÄquivalente Triethylamin in protonierter Form, werden mit 32,6 g (115 mÄquivalente) einer 6 %igen wäßrigen Ammoniaklösung versetzt. Nach 30-minütigem Rühren bei Raumtemperatur wird ebenfalls bei Raumtemperatur im Vakuum ein Gemisch aus Wasser, Triethylamin und Ammoniak abdestilliert und in einer Kühlfalle kondensiert. Man erhält 140 g Kondensat, welches 22 mÄquivalente Triethylamin enthält. Daraus errechnet sich eine Austauschrate von 67,5 Äquivalent-%.

Durch Zugabe von 140 g Wasser wird die Dispersion wieder auf 30 % Festkörper eingestellt. Sie weist einen pH-Wert von 8,3 ± 0,2 auf und ist monatelang lagerstabil. Die Teilchengröße wurde nicht verändert.

Beispiel 2 (erfindungsgemäßes Verfahren)

Beispiel 1 wird wiederholt jedoch unter Verwendung einer dreifachen Menge an 6-%.iger wäßriger Ammoniaklösung (345 mÄquivalente). Das Kondensat (155 g) enthält 28,4 g mÄquivalent Triethylamin, woraus sich eine Austauschrate von mindestens 88,5 %. errechnet.

Beispiel 3 (erfindungsgemäßes Verfahren)

500 g der Polyurethandispersion II werden mit 22,7 g einer 25 %igen wäßrigen Ammoniaklösung (15-facher Überschuß bez. auf Triethylamin) vermischt, 2 Stunden bei Raumtemperatur gerührt und im Vakuum andestilliert. In der mit Trockeneis gekühlten Vorlage erhält man 170 ml Destillat bestehend aus Wasser,

Ammoniak und Triethylamin. Der Triethylamingehalt wird quantitativ analysiert. Er entspricht einer Menge von 86 % der Theorie. Völlig analog erhält man unter Verwendung der Polyurethandispersion III eine Menge von 81 % der Theorie an Triethylamin.

Beispiel 4 (Herstellung einer wäßrigen Polyurethandispersion und erfindungsgemäßes Verfahren)

Aus
0,16 Mol eines Polyesterpolyols des Molekulargewichts 1740 aus (i) äquimolaren Anteilen Adipinsäure und Phthalsäure und (ii) Ethylenglykol,
0,05 Mol Dihydroxypolycaprolacton des Molekulargewichts 2000,
0,5 Mol 2,2-Bis(4-hydroxycyclohexyl)propan (BHP),
0,4 Mol Hexamethylendiisocyanat (HDI)
0,6 Mol 3-Isocyanatomethyl-3,5,5-trimethylcyclohexylisocyanat (IPDI) und
0,25 Mol Triethylammoniumsalz der Dimethylolpropinonsäure
wird gemäß Stand der Technik nach dem Acetonverfahren eine acetonische Dispersion hergestellt.

Der Carboxylatgruppengehalt des dispergierten Ionomeren liegt bei 33,3 mÄquivalenten pro 100 g Feststoff. Der aus Trübungsmessungen ermittelte Partikeldurchmesser ist < als 20 nm.

Die acetonische Dispersion wird über Nacht bei Raumtemperatur gerührt. Der Ansatz wird in vier gleiche Mengen geteilt und mit soviel 6 %igen wäßrigen Ammoniak versetzt, daß der molare Überschuß an Ammoniak bezogen auf die $-COO^{\ominus}$ Gruppen beträgt:
4 a) doppelt
4 b) 5-fach
4 c) 10-fach
4 d) 20-fach

Nach 30 Minuten Rühren bei Raumtemperatur wird im Vakuum unter Verwendung von Kühlfallen ein Gemisch aus Aceton, Wasser, Ammmoniak und Triethylamin abdestilliert. Das aufgrund der Verdrängungsreaktion im Destillat vorhandene Triethylamin wird quantitativ analysiert. Aus den gefundenen Mengen ergibt sich der erreichte Austausch von Triethylamin gegen Ammoniak.

Der Feststoffgehalt der Dispersionen 4 a) bis 4 b) wird jeweils durch Wasserzugabe auf 30 % eingestellt. Es resultieren jeweils feinteilige, stabile wäßrige Polyurethandispersionen, deren kationische Gegenionen zu den eingebauten Carboxylatgruppen, wie aus nachstehender Tabelle ersichtlich, überwiegend aus unsubstituierten Ammoniumionen bestehen.

| | $\frac{\text{Mol } NH_3}{\text{Mol } NEt_3}$ | Mol % $-COO^{\ominus}$ $N^{\oplus}H_4$ |
|---|---|---|
| 4 a) | 2 | 54 |
| 4 b) | 5 | 76 |
| 4 c) | 10 | 81 |
| 4 d) | 20 | 92 |

**Ansprüche**

1. Verfahren zur Herstellung von wäßrigen Dispersionen von eingebaute Carboxylatgruppen aufweisenden Polyurethanen, in denen als Gegenionen zu den Carboxylatgruppen überwiegend Ammoniumionen

$\overset{\ominus}{NH_4}$

vorliegen, dadurch gekennzeichnet, daß man wäßrige Dispersionen von eingebaute Carboxylatgruppen aufweisenden Polyurethanen, in denen als Gegenionen zu den Carboxylatgruppen Ammoniumionen der Formel

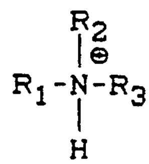

vorliegen, wobei
$R_1$, $R_2$ und $R_3$ für gleiche oder verschiedene Alkylreste mit 1 bis 4 Kohlenstoffatomen stehen, mit der Maßgabe, daß die Summe der Anzahl der Kohlenstoffatome dieser Reste 3 bis 6 beträgt,
mit einer, bezogen auf die Trialkylammoniumionen, zumindest äquivalenten Menge Ammoniak behandelt und anschließend die im Überschuß vorliegenden freien Basen im Vakuum entfernt.
2. Verfahren gemäß Anspruch 1, dadurch gekennzeichnet, daß man das Ammoniak in Form einer wäßrigen Ammoniaklösung verwendet.
3. Verfahren gemäß Anspruch 1 und 2, dadurch gekennzeichnet, daß man solche anionisch modifizierten Polyurethane in Form ihrer wäßrigen Dispersion verwendet, die 0,1 bis 120 mÄquivalente pro 100 g Feststoff Carboxylatgruppen in Form von eingebauten Struktureinheiten der Formel

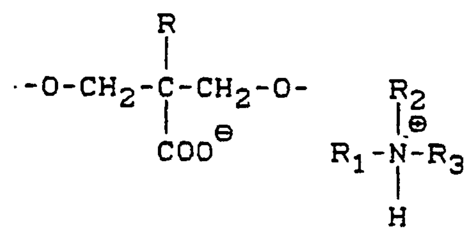

aufweisen, wobei
R für einen Alkylrest mit 1 bis 4 Kohlenstoffatomen steht und
$R_1$, $R_2$ und $R_3$ die im Anspruch 1 genannte Bedeutung haben.
4. Verfahren gemäß Anspruch 1 bis 3, dadurch gekennzeichnet, daß man solche Polyurethane in Form ihrer wäßrigen Dispersion verwendet, die bis zu 30 Gew.-% an innerhalb von end- oder seitenständig angeordneten Polyetherketten vorliegenden Ethylenoxideinheiten aufweisen.
5. Verfahren gemäß Anspruch 1 bis 4, dadurch gekennzeichnet, daß man solche Dispersionen von anionisch modifizierten Polyurethanen verwendet, in denen als Gegenionen solche der Formel

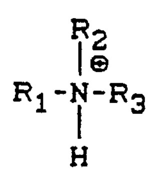

vorliegen, wobei
$R_1$, $R_2$ und $R_3$ jeweils für einen Ethylrest stehen.
6. Verwendung der gemäß Anspruch 1 bis 5 erhaltenen wäßrigen Dispersionen als Beschichtungsmittel für beliebige Substrate.